# EUROPEAN PATENT SPECIFICATION

(11) **EP 0 627 654 B1**
(45) Date of publication and mention of the grant of the patent: **11.08.1999**
(21) Application number: 94303804.2
(22) Date of filing: 26.05.1994
(51) Int. Cl.: G03B 27/62

(54) **Negative film masking system in photographic processing and printing machine**
Maskierungssystem für Negativ-Film in fotografischem Verarbeitungs- und Druckgerät
Système de cache pour film négatif dans un appareil photographique de traitement et d'impression

(30) Priority: 03.06.1993 JP 13352593
(43) Date of publication of application: 07.12.1994
(73) Proprietor: NORITSU KOKI CO., LTD., Wakayama-shi, Wakayama (JP)
(72) Inventor: Oka, Noriyuki, Wakayama-shi, Wakayama (JP); Ikehara, Hiroaki, Wakayama-shi, Wakayama (JP)
(74) Representative: Hillier, Peter

(56) References cited:
- DE-B- 1 275 353
- FR-A- 1 347 409
- PATENT ABSTRACTS OF JAPAN vol. 17, no. 54 (P-1480) 3 February 1993 & JP-A-04 265 967 (FUJI PHOTO FILM) 22 September 1992

## Description

The present invention relates to a negative film masking system comprising a negative film masking assembly which is attachable to a negative film masking mount at the printing station of a known photographic processing and printing machine.

A negative film masking system is disclosed in DE-B-1275353, in which a guide plate and a platen each have four-sided film gate apertures or cut outs, the cut out in the guide plate corresponding to the size and shape of the underlying negative and the cut out in the platen being slightly larger. On changing to a different format, a guide plate and platen having different sized cut outs are substituted.

A negative film masking system in the photographic processing and printing machine is designed in which while a negative film loaded in a negative film masking assembly is being advanced frame by frame, a desired frame of the negative film is halted to locate in a four-sided film gate aperture (at the exposure location) of the masking assembly and exposed to produce a print on a sensitised paper as securely held down with a film hold-down of the masking assembly.

A common photographic negative film of the 135 roll or piece form contains standard size frames and panoramic size frames in random combination. Hence, printing of an image of the panoramic size requires the use of a specific masking having a film gate aperture which is identical in size to the panoramic frame.

The use of such a specific masking is essential to measure the transmission of light through the frame with LATD sensors which will be described later. If a proportion of light transmitted through unexposed regions of the film is detected, it interrupts the correct measurement.

It is a good idea to have the masking system provided with a detector capable of automatically distinguishing the panoramic frame from the standard size frame on a negative film for ease of printing operation. Although the masking system with such a detector allows the operator to perform a printing work with much ease, it will be high in the cost of production.

If no such detector is equipped with the masking system, the operator has to check a negative film visually for panoramic frames and remember or record the location of those frames to be printed prior to loading the film to the masking system.

The memorization or recording of the location of panoramic frames of the negative film is however troublesome demanding an extra step of work in the printing operation. Also, if any panoramic frame is incorrectly recognized or recorded as of the standard size, it is exposed in the standard size film gate aperture of the masking thus causing the processing and printing machine to lose its exposure control.

It is an object of the present invention, in view of the foregoing aspects, to provide a negative film masking system for use in a photographic processing and printing machine, in which each desired panoramic frame on a negative film loaded in a negative film masking assembly is visibly identified when it is located at the exposure location or one frame before the same so that the exposure through the panoramic size film gate aperture of the masking assembly can successfully be carried out without memorizing or recording the location of the panoramic frames.

### SUMMARY OF THE INVENTION

For achievement of the above object, a negative film masking system for use in a photographic processing and printing machine is provided as defined in claim 1 of this application. The photographic processing and printing machine comprises a negative film masking assembly consisting mainly of a masking and a negative film hold-down and a masking mount to which the negative film masking assembly is loaded, where photographic prints are produced from a negative film loaded in the negative film masking assembly and having standard size frames and panoramic size frames in random combination. The panoramic size frame is designated by masking both widthwise edges of the film in shooting to make two unexposed regions in a standard frame. The negative film masking system provides a four-sided film gate aperture in the masking which is identical in the size to the panoramic size frame, provides a four-sided film gate aperture in the negative film hold-down which is identical in the size to the four-sided film gate aperture of the masking, provides detecting apertures in particular positions of the masking which are off the four-sided film gate aperture and in the unexposed regions for the panoramic size, and provides detecting apertures in the negative film hold-down which communicate with the detecting apertures of the masking, so that when a panoramic frame of the film is located in the four-sided film gate aperture or one frame therefrom, its two unexposed regions can be viewed through the detecting apertures of the negative film hold-down and when a standard size frame is located in the four-sided film gate aperture or one frame therefrom, it can be viewed and identified through the same.

The detecting apertures of both the masking and the negative film hold-down may be arranged to extend at a predetermined angle.

The detecting apertures of the masking and the negative film hold-down may be arranged to extend at an angle towards the eyes of an operator.

One or more of the detecting apertures may be covered with a shading filter.

Rows of the detecting apertures may be provided in both the masking and the negative film hold-down and in particular, the detecting apertures in each row of the negative film hold-down may be separated by louvers which are tilted at the same angle as of the line of vision of an operator.

In action of the negative film masking system for use in a photographic processing and printing machine, a desired frame on a negative film to be printed is advanced to the four-sided film gate aperture of the masking and arrested at the exposure location as being held down with the negative film hold-down. When the desired frame is a panoramic size, it matches the four-sided film gate aperture of the masking with the unexposed regions being located over the detecting apertures of the masking and beneath the detecting apertures of the negative film hold-down.

As the result, a portion of the irradiation of light enters the detecting apertures of the masking and passes through the unexposed regions for the panoramic size and the detecting apertures of the negative film hold-down to the eyes of the operator. Thus, the panoramic frame on the film at the exposure location can correctly be identified by the operator before being exposed under control to make a print.

If a frame of the standard size is advanced to the film gate aperture of the masking, its corresponding portions are located over the detecting apertures of the masking and beneath the detecting apertures of the negative film hold-down and can thus be viewed and identified by the operator who in turn feeds the negative film further to find a succeeding panoramic frame.

Alternatively, in action of the negative film masking system for use in a photographic processing and printing machine, a desired frame on a negative film to be printed is advanced to the four-sided film gate aperture of the masking and arrested at the exposure location as being held down with the negative film hold-down. When the succeeding frame after the present frame at the exposure location is a panoramic size, the unexposed regions for the panoramic size are located over the detecting apertures of the masking and beneath the detecting apertures of the negative film hold-down.

As the result, a portion of the irradiation of light enters the detecting apertures of the masking and passes through the unexposed regions for the panoramic size and the detecting apertures of the negative film hold-down to the eyes of the operator. Thus, the succeeding frame after the present frame or one frame before the exposure location can correctly be identified as a panoramic size by the operator.

If a frame of the standard size is advanced to one frame before the film gate aperture of the masking, its corresponding portions are located over the detecting apertures of the masking and beneath the detecting apertures of the negative film hold-down and can thus allow the operator to judge that the succeeding frame is a standard size.

In the negative film masking system for use in a photographic processing and printing machine, the detecting apertures of both the masking and the negative film hold-down may be arranged to extend not vertically but at the predetermined angle, whereby any portion of the irradiation of light passing the detecting apertures will not be detected with the sensors of an exposure control unit.

In the negative film masking system for use in a photographic processing and printing machine, the detecting apertures of the masking and the negative film hold-down may be arranged to extend at an angle towards the eyes of an operator. This allows the operator to intercept any portion of the irradiation of light passing the detecting apertures with much ease.

In the negative film masking system for use in a photographic processing and printing machine, at least one or more of the detecting apertures may be covered with the shading filters. As the result, a portion of the irradiation of light passing the detecting apertures is decreased in brightness and will hardly be sensed by the sensors in the exposure control unit.

In the negative film masking system for use in a photographic processing and printing machine, the detecting apertures provided in both the masking and the negative film hold-down may be formed of a rectangular configuration and those in the negative film hold-down may be separated by the louvers which extend lengthwisely of the detecting aperture for ease of viewing the unexposed regions for the panoramic size. Also, the louvers may be tilted at the same angle as of the line of vision of an operator and arranged not prevent the operator from performing an exposure control.

### BRIEF DESCRIPTION OF THE DRAWINGS

Fig. 1 is an overall perspective view of a photographic processing and printing machine relating to the present invention;
Fig. 2 is a perspective view of a printing station of the photographic processing and printing machine;
Fig. 3 is an overall perspective view showing a first embodiment of the present invention;
Fig. 4 is an overall perspective view showing a primary part of the first embodiment of the present invention;
Fig. 5 is a perspective view showing a negative film masking assembly of the first embodiment of the present invention;
Fig. 6 is a cross sectional view of the negative film masking assembly of the first embodiment of the present invention;
Fig. 7 is a plan view showing an operation on a negative masking system of the first embodiment of the present invention;
Fig. 8 is a plan view showing an operation on the negative film masking system of the first embodiment of the present invention;
Fig. 9 is a longitudinally cross sectional view of the negative film masking system of the first embodiment of the present invention explaining an operation;
Fig. 10 is a longitudinally cross sectional view of the negative film masking system of the first embodiment of the present invention explaining another operation;
Fig. 11 is a plan view of the negative film masking system of the first embodiment of the present invention explaining an operation;
Fig. 12 is a plan view of the negative film masking system of the first embodiment of the present invention explaining another operation;
Fig. 13 is an exploded perspective view of a negative film masking system showing a second embodiment of the present invention;
Fig. 14 is a cross sectional view of a primary view of a negative film masking assembly showing a third embodiment of the present invention;
Fig. 15 is a perspective view of a primary part of a negative film masking assembly showing a fourth embodiment of the present invention;
Fig. 16 is a perspective view of a primary part of the negative film masking assembly of the fourth embodiment of the present invention; and
Fig. 17 is a perspective view of a negative film masking assembly showing a fifth embodiment of the present invention.

### DETAILED DESCRIPTION OF THE PREFERRED EMBODIMENTS

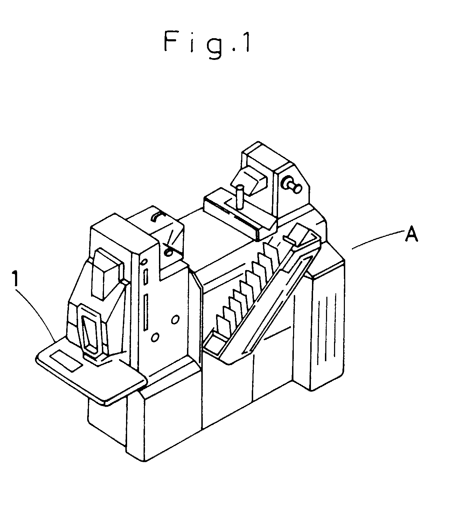

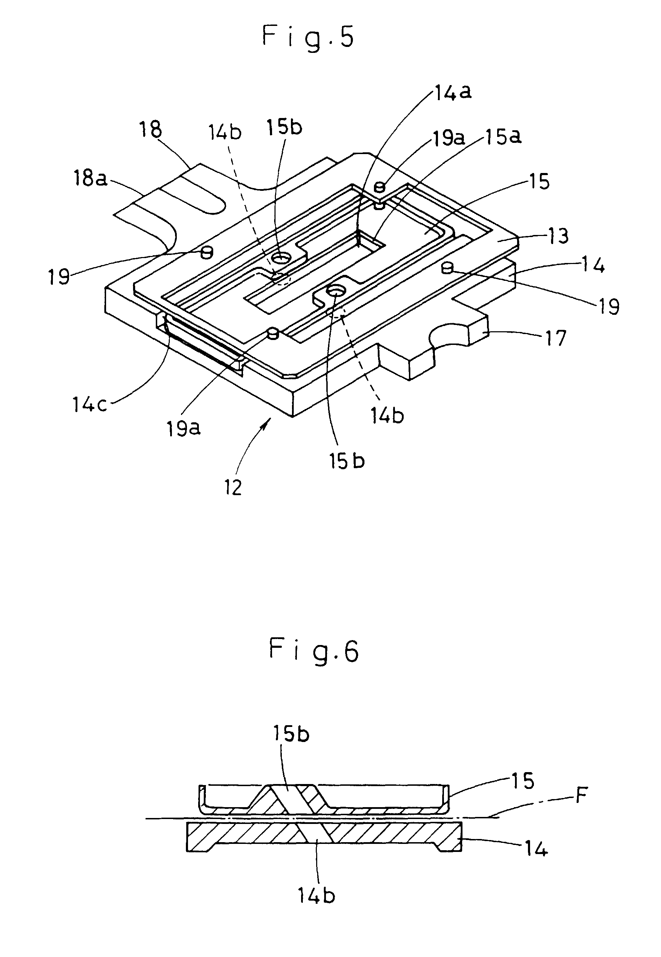

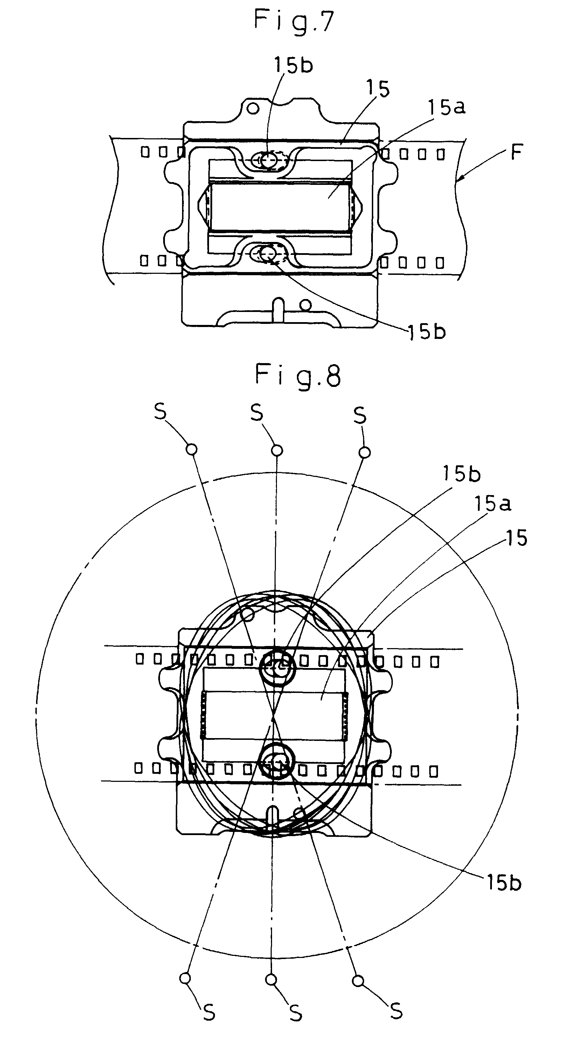

Figs. 1 to 12 illustrate a first embodiment of the present invention.

A photographic processing and printing machine denoted by A is provided for making prints from a negative film F which includes at random order standard size pictures F1 and panoramic size pictures F2.

The standard size picture F1 is an image frame of the standard size, 24 mm x 36 mm, on a known 135 35-mm film having series of perforations P at both edges. The panoramic size picture F2 is a rectangular image on a 135 film having a size 13 mm x 36 mm as reduced in the width by about 5 mm from both sides.

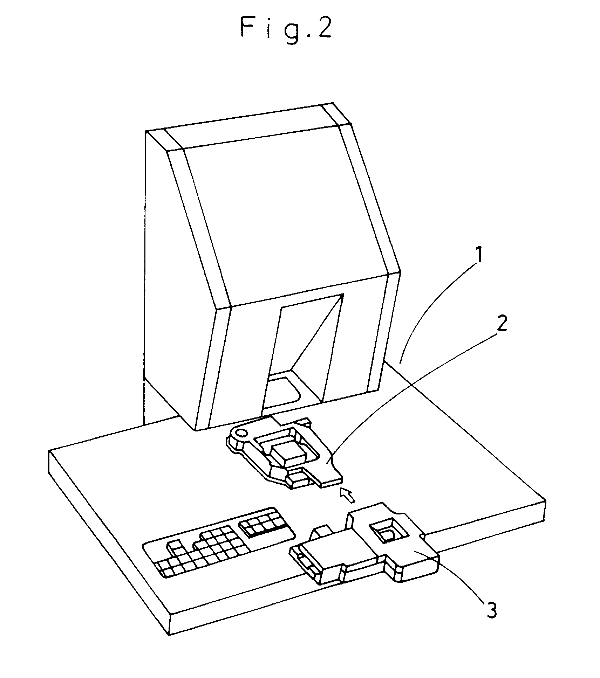

Fig. 1 is a perspective view of the photographic processing and printing machine A where a negative masking mount 2 best shown in Fig. 2 is installed at the center of a printing station 1.

As shown in Fig. 2, there is provided an automatic negative masking unit 3 which comprises a unit body 4 and a negative masking assembly 12.

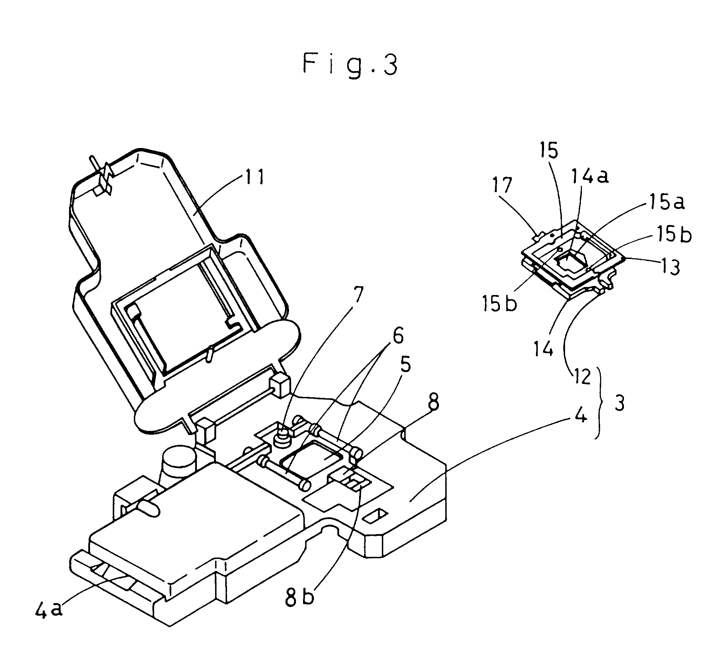

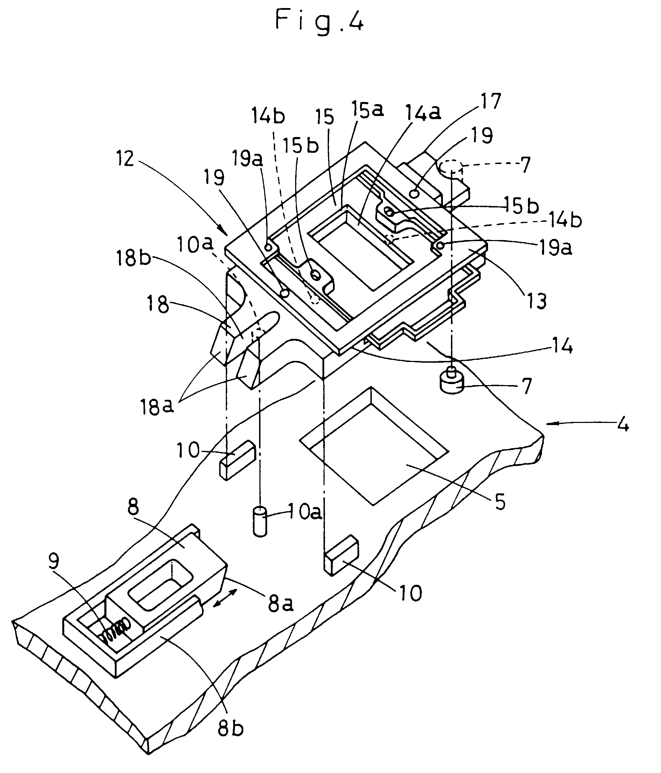

The unit body 4 has a four-sided opening 5 therein and incorporates an image detecting sensor, a frame feeder, and other relevant mechanisms which are automatically actuated through calculation and control with a computer in the photographic processing and printing machine A when the unit body 4 being loaded on and electrically connected to the negative masking mount 2, as shown in Figs. 3 and 4.

Two frame feeding rollers 6 are disposed at the leading and trailing ends of the four-sided opening 5 across the feeding direction of the negative film F. There are a fitting pin 7 provided on one side of the four-sided opening 5 of the unit body 4 for serving as an engaging member and a latch 8 provided on the other side, both being aligned across the film feeding direction. The latch 8 remains urged by a spring 9 to move forward along a guide 8b. The latch 8 has at front end a engaging slope 8a thereof which is beveled at lower. A pair of mounting guides 10 are disposed at a distance from each other on the side of the four-sided opening 5 for loading the negative masking assembly 12. There is a guide pin 10a disposed between the two mounting guides 10 to situate on the center line of the movement of the latch 8.

The unit body 4 also has a cover 11 for opening and closing.

The negative masking assembly 12 comprises a negative film hold-down frame 13, a masking 14, and a negative film hold-down 15.

The masking 14 has at center a four-sided gate aperture 14a therein equal to the size of the panoramic frame F2.

Also, a pair of detecting apertures 14b are provided in the masking 14 on both sides of the feeding direction of the negative film F (at exposure shielding regions).

In this embodiment, the detecting apertures 14b of the masking 14 are determined so that when the panoramic frame F2 of the negative film F is located in the four-sided gate aperture 14a, its unexposed regions F21 partially cover the detecting apertures 14b respectively and more specifically, a half of each detecting aperture 14b is closed by the unexposed region F21 of the film F.

The negative film hold-down frame 13 is positioned by support pin 19 extending from the upper surface of the masking 14 and remains urged upwardly by coil springs 16.

Similarly, the negative film hold-down 15 is positioned by support pins 19a extending from the lower surface of the negative film hold-down frame 13 and remains urged by coil springs 16a downwardly against the masking 14.

The negative film hold-down 15 has also a four-sided gate aperture 15a therein corresponding to the four-sided gate aperture 14a of the masking 14. In addition, two detecting apertures 15b are provided on both sides of the four-sided gate aperture 15a in the negative film hold-down 15 so that they communicate with the two detecting apertures 14b of the masking 14 respectively.

In particular, the detecting apertures 15b in the negative film hold-down 15 are arranged to extend at 45 degrees to the vertical for giving high visibility to the operator in detecting action. The angle in the apertures 15b may be changed to meet any other design requirements.

There is a distance between the masking 14 and the negative film hold-down 15 for passing the negative film F. An engaging projection 17 having a recess at the distal end is outwardly provided on one side of the masking 14 of the negative masking assembly 12 and an engaging member 18 on the other side. The engaging member 18 has at center an outwardly opening slot 18b therein and at distal end engaging slopes 18a thereof on both sides of the slot 18b which are beveled at upper.

The mounting of the negative masking assembly 12 to the unit body 4 will be described.

As shown in Figs. 3 to 5, after opening the cover 11 of the unit body 4, the engaging projection 17 of the negative masking assembly 12 is fitted on the fitting pin 7 of the unit body 4. While the latch 8 of the unit body 4 is moved backward by resisting against the urging force of the spring 9, the negative masking assembly 12 is lowered with the slot 18b of the engaging member 18 accepting the guide pin 10a. The negative masking assembly 12 is then positioned and held between the two mounting guides 10 as placed on the unit body 4. When having been released, the latch 8 moves forward and urges with its front slope 8a against the engaging slopes 18a of the engaging member 18 of the assembly 12. Accordingly, the negative masking assembly 12 remains urged at its correct position on the unit body 4.

The negative film F is then fed to pass horizontally in the feeding direction between the masking 14 and the negative film hold-down 15 of the negative masking assembly 12 as being pressed and driven by the feeding rollers 6.

The printing operation starts with loading of the automatic negative masking unit 3 carrying the masking assembly 12 on to the negative film masking mount 2 in the printing station 1 of the photographic processing and printing machine before feeding of the negative film F to be printed.

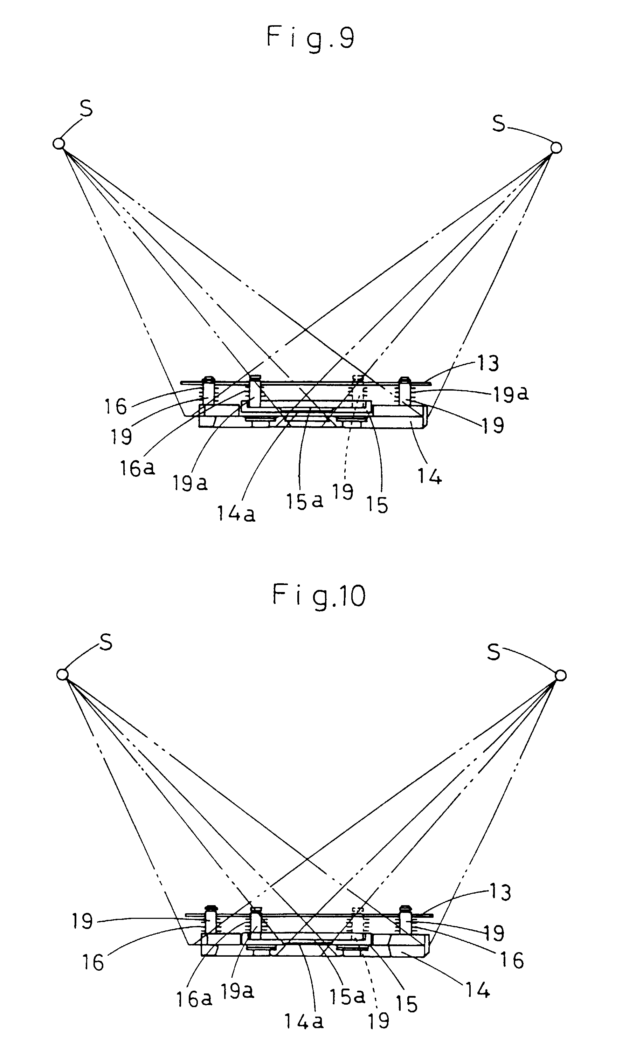

Denoted by S in Figs. 9 and 10 are LATD sensors.

The exposure required for making prints on a sensitized paper from the color negative film F is determined by a ratio between the irradiation of light from a light source fallen on the desired image frame of the negative film F at the four-sided gate aperture 15a and the transmission of light passed through the film F. The transmission of light (including B, G, and R color components) passed through the image frame of the negative film F is measured with the LATD sensors S.

LATD stands for Large Area Transmittance Density which means an average transmittance density.

The action of the negative masking system of this embodiment will now be described in steps.

1. The masking assembly 12 for panoramic images F2 is loaded and set in the unit body 4 of the negative film masking unit 3.

2. The leading end of a negative film F is inserted into a film guide passage through a film feeding inlet 4a of the unit body 4.

3. The negative film F is advanced as driven by the feeding rollers 6 powered by a motor (not shown).

4. A desired frame of the negative film F is halted to locate in the four-sided gate aperture 14a of the masking 14 (at the exposure location as shown in Fig. 9) and securely pressed down by the negative film hold-down 15 as prevented from undulating (Fig. 10).

When the panoramic frame F2 of the negative film F is located in the four-sided gate aperture 14a of the masking 14, the light passed through the unexposed regions F21 for the panoramic frame F2 is directed from the detecting apertures 15b of the film hold-down 15 to the eyes of the operator who can in turn judge that the image frame in the four-sided gate aperture 14a or at the exposure location is an image of the panoramic size F2.

5. After the detection, the panoramic frame F2 is exposed to the irradiation of light under control.

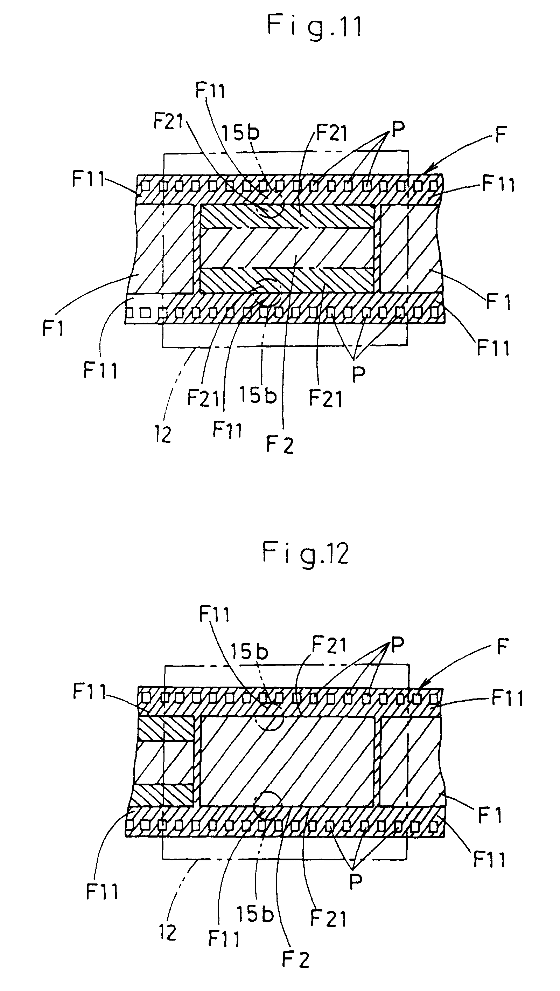

6. If a standard size frame F1 of the negative film F comes into the four-sided gate aperture 14a of the masking 14, the half of each detecting aperture 15b is interrupted by an unexposed region F11 outside the standard image frame F1 of the negative film F while the other half being occupied by a part of the image frame F1 (Fig. 12).

Accordingly, the light passed through the standard image frame F1 in the detecting apertures 14b is directed from the detecting apertures 15b of the film hold-down 15 to the eyes of the operator which can thus judge that the image frame at the exposure location is an image of the standard size F1.

7. After the detection, the negative film F is further advanced to the next frame of the panoramic size F2.

In the latter case, both the unexposed region F11 and the standard frame F1 appear in the detecting aperture 15b allowing the operator to view and identify the content of the standard frame F1 for ease of the printing operation.

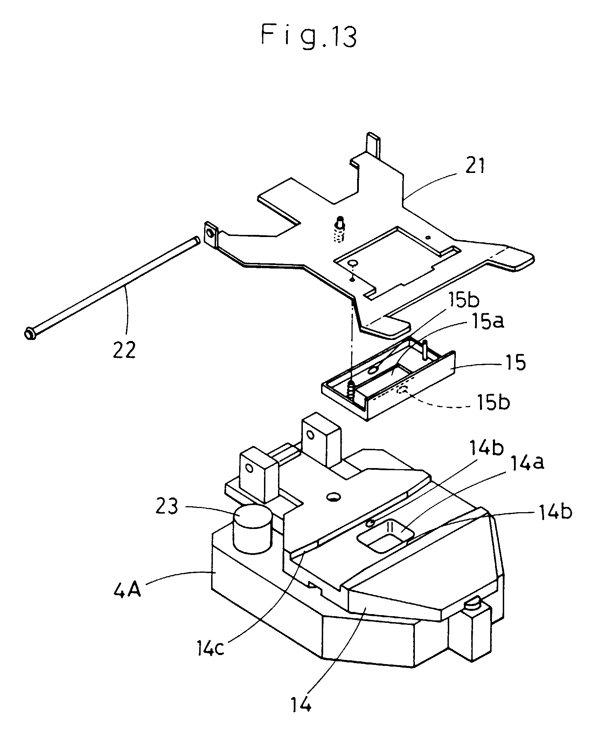

A second embodiment of the present invention will be described referring to Fig. 13.

The second embodiment employs a manual type of the negative masking unit.

A masking 14 to be loaded on a negative film masking mount 4A has a negative film guide recess 14c provided therein.

There is a pressure plate 21 pivotably mounted by a pin 22 to the masking 14 for upward and downward swing motions. A solenoid 23 for actuating the pressure plate 21 is disposed on the negative film masking mount 4A.

When the solenoid 23 is magnetized, it causes the pressure plate 21 to swing downwardly so that a negative film hold-down 15 mounted to the pressure plate 21 presses down the negative film F.

The masking 14 also has a four-sided gate aperture 14a therein and a pair of detecting apertures 14b provided on both sides of the four-sided gate aperture 14a thereof.

Similarly, the negative film hold-down 15 has at center a four-sided gate aperture 15a and two detecting apertures 15b provided on both sides of the four-sided gate aperture 15a thereof for communication with the detecting apertures 14b of the masking 14.

As understood, the manual type of the negative film masking unit of second embodiment allows the operator to determine whether or not the image frame at the exposure location is an image of the panoramic size F2 by viewing through the detecting apertures 14b and 15b.

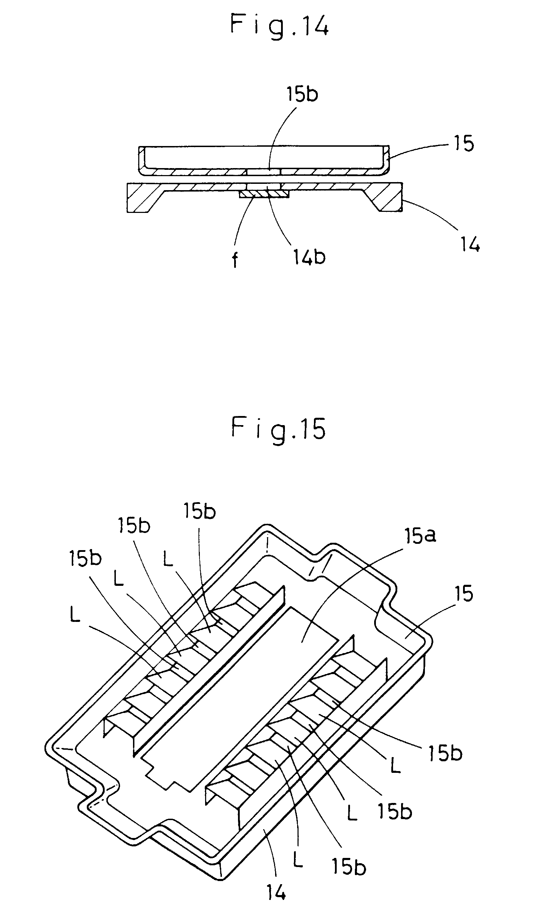

A third embodiment of the present invention will now be described referring to Fig. 14.

In this embodiment, the detecting apertures 14b of a masking 14 are arranged to extend not at an angle but perpendicular to the masking 14 and so the detecting apertures 15b of a negative film hold-down 15.

The detecting apertures 14b of the masking 14 is covered with shading filters f which are preferably ND filters.

As the detecting apertures 14b are protected with the shading filters f, a portion of the irradiation of light during the printing is prevented from passing through the detecting apertures 14b and 15b and entering directly the LATD sensors. This will eliminate erratic sensing action of the LATD sensors.

It is understood that the shading filter f is not limited to the ND filters and any appropriate filters, e.g. color filters, capable of preventing the erratic sensing action of the LATD sensors will be used with equal success.

The other components and their arrangement of the third embodiment are identical to those of the previous embodiments and will no more be explained.

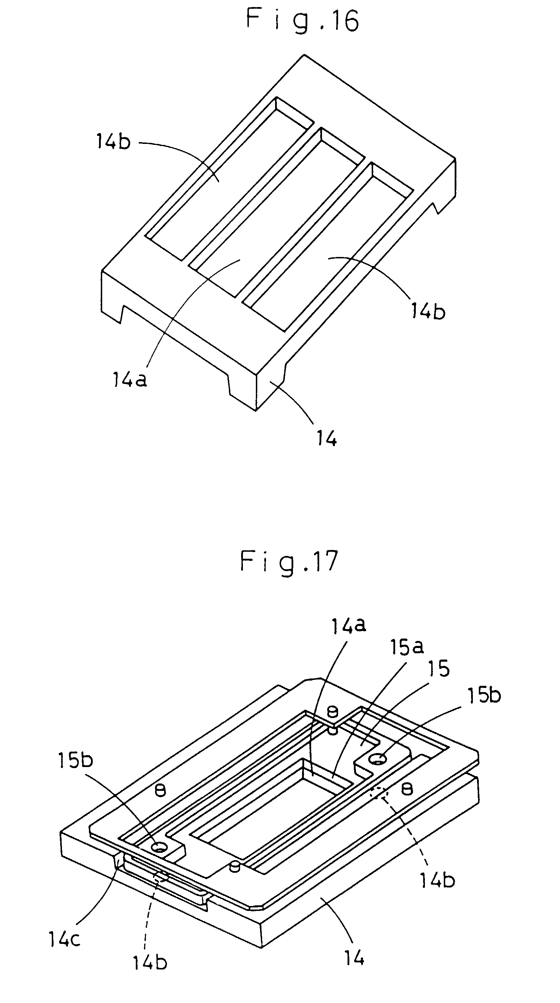

A fourth embodiment of the present invention will be described referring to Figs. 15 and 16.

A masking 14 has a pair of detecting apertures 14b provided on both sides (at the exposure shielding regions) of the four-sided film gate aperture 14a thereof. The detecting apertures 14b are shaped of a rectangular configuration extending in the feeding direction of the negative film F.

A negative film hold-down 15 has at center a four-sided gate aperture 15a corresponding to the four-sided gate aperture 14a of the masking 14. Also, two rows of detecting apertures 15b are provided on both sides of the gate aperture 15b of the negative film hold-down 15 for communication with the detecting apertures 14b of the masking 14.

Each of the detecting apertures 15b is shaped of a rectangular configuration having its longer sides extending at a right angle to the feeding direction of the film F.

The detecting apertures 15b in the row are separated from each other by louvers L.

In action, when a desired panoramic frame F2 of the negative film F is halted to position in the four-sided gate aperture 14a (at the exposure location) of the masking 14, its unexposed regions F21 cover the detecting apertures 14b as being just beneath the detecting apertures 15b of the negative film hold-down 15. A portion of the irradiation of light is thus passed through the unexposed regions F21 of the panoramic frame F2 in the detecting apertures 14b and directed by the louvers L from the detecting apertures 15b to the eyes of the operator.

The other components and their arrangement in the fourth embodiment are identical to those of the previous embodiments and will no more be explained.

A fifth embodiment of the present invention will now be described referring to Fig. 17.

A masking 14 has at center a four-sided film gate aperture 14a therein equal to the panoramic frame side F2 and a pair of detecting apertures 14b provided on both the left and right sides (at the exposure shielding regions) of and outside the leading and trailing ends of the film gate aperture 14a thereof.

Similarly, a negative film hold-down 15 has at center a four-sided film gate aperture 15a therein corresponding to the film gate aperture 14a of the masking 14. Also, a pair of detecting apertures 15b are provided in the negative film hold-down 15 for communication with the detecting apertures 14b of the masking 14.

In action, when the succeeding frame of the present frame of the negative film F held in the film gate aperture 14a (at the exposure location) is an image of the panoramic size F2, its unexposed region F21 covers the detecting aperture 14b of the masking 14 as being located just beneath the detecting aperture 15b of the film hold-down 15.

Accordingly, a portion of the irradiation of light in the printing is passed through the unexposed region F21 of the succeeding panoramic frame F2 in the detecting aperture 14b of the masking 14 and directed from the detecting aperture 15b of the film hold-down 15 to the eyes of the operator who can thus determine that the succeeding frame is an image of the panoramic size F2.

If the succeeding frame of the negative film F is an image of the standard size F1, it covers the detecting aperture 14b of the masking 14 as being located just beneath the detecting aperture 15b of the film hold-down 15.

Hence, a portion of the irradiation of light is passed through an exposed region of the succeeding standard frame F1 in the detecting aperture 14b of the masking 14 and directed from the detecting aperture 15b of the film hold-down 15 to the eyes of the operator who can thus determine that the succeeding frame is an image of the standard size F1.

After the detection, the succeeding panoramic frame F2 of the negative film F is advanced to the exposure location and printed down through exposure control.

The other components and their arrangement in the negative film masking system of this embodiment are identical to those of the first embodiment and will no more be explained.

## Claims

1. A negative film masking system for use in a photographic processing and printing machine arranged to produce photographic prints from a negative film (F) loaded in a negative film masking assembly (12) and having standard size frames (F1) and panoramic size frames (F2) in random combination, the panoramic size frame (F2) being designated by masking both longitudinal edges of the film (F) in shooting to make two first unexposed region (F21) in an otherwise standard frame, the negative film masking system comprising the negative film masking assembly (12) and a masking mount (2) to which the negative film masking assembly (12) is loaded, the negative film masking assembly (12) comprising a masking means (14) and a negative film hold-down means (15), characterised by;
a first four-sided film gate aperture (14a) in the masking means (14) which is identical in area and shape to the panoramic size frame (F2);
a second four-sided film gate aperture (15a) in the negative film hold-down means (15) which is identical in area and shape to the first four-sided film gate aperture (14a);
first detecting apertures (14b) in particular positions of the masking means (14) which are outside the four-sided film gate aperture (14a) and at least partially within said first unexposed regions (F21) of a panoramic size frame (F2) located at or one frame from the four-sided film gate aperture (14a);
second detecting apertures (15b) in the negative film hold-down means in optical communication with the detecting apertures of the masking means (14).

2. A negative film masking system as claimed in claim 1, wherein the detecting apertures are arranged to allow a view of a standard size frame (F1) and also second unexposed regions (F11) outside the standard size frame (F1).

3. A negative film masking system as claimed in claim 1 or 2, wherein the positions of the first detecting apertures (14b) are at least partially within the region of a standard size frame (F1) located one frame from the four sided gate apertures (14b, 15b).

4. A negative film masking system as claimed in any one of claims 1 to 3, wherein the axes of the optical paths joining corresponding apertures of said first and second detecting apertures (14b, 15b) extend at a predetermined angle to a plane defined by a negative film (F) loaded in the negative film masking assembly (12).

5. A negative film masking system as claimed in any one of claims 1 to 3, wherein the axes of the optical paths joining corresponding apertures of said first and second detecting apertures (14b, 15b) extend towards the eyes of a person operating the photographic processing and printing machine.

6. A negative film masking system as claimed in any one of claims 1 to 3, wherein at least one of the first and second detecting apertures (14b, 15b) is covered with a light attenuating filter.

7. A negative film masking system as claimed in any one of claims 1 to 3, wherein louvres are provided in the second detecting apertures (15b), said Louvres being tilted at the same angle as a line of vision of a person operating the photographic processing machine.

## Patentansprüche

1. Negativfilm-Abdecksystem zur Verwendung bei einer photographischen Verörbeitungs- und Abziehmaschine, die ausgelegt ist, um photographische Abzüge von einem in eine Negativfilm-Abdeckeinheit (12) eingelegten Negativfilm (F) zu machen, der Standardgröße-Bilder (F1) und Panoramagröße-Bilder (F2) in zufälliger Kombination hat, wobei das Panoramagröße-Bild (F2) festgelegt wird durch Abdecken beider Längsränder des Films (F) beim Belichten, um zwei erste unbelichtete Gebiete (F21) in einem Standardbild zu erhalten, wobei das Negativfilm-Abdecksystem die Negativfilm-Abdeckeinheit (12) und ein Abdeckgehäuse (2), in das die Negativfilm-Abdeckeinheit (12) eingelegt ist, aufweist, wobei die Negativfilm-Abdeckeinheit ein Abdeckmittel (14) und ein Negativfilm-Niederhaltemittel (15) aufweist, gekennzeichnet durch:
eine erste, vierseitige Filmfenster-Öffnung (14a) in dem Abdeckmittel (14), die bezüglich der Fläche und der Form identisch mit dem Panoramagröße-Bild (F2) ist;
eine zweite, vierseitige Filmfenster-Öffnung (15a) in dem Negativfilm-Niederhaltemittel (15), die bezüglich der Fläche und der Form identisch mit der ersten, vierseitigen Filmfenster-Öffnung (14a) ist;
erste Erfassungsöffnungen (14b) in bestimmten Positionen des Abdeckmittels (14), die außerhalb der vierseitigen Filmfenster-Öffnung (14a) liegen, und zumindest teilweise innerhalb der ersten, unbelichteten Gebiete (F21) eines Panoramagröße-Bildes (F2) liegen, das bei, oder um ein Bild entfernt von der vierseitigen Filmfenster-Öffnung (14a) angeordnet ist;
zweite Erfassungsöffnungen (15b) in dem Negativfilm-Niederhaltemittel, die in optischer Verbindung mit den Erfassungsöffnungen der Abdeckmittel (14) stehen.

2. Negativfilm-Abdecksystem gemäß Anspruch 1, wobei die Erfassungsöffnungen ausgelegt sind, um eine Betrachtung eines Standardgröße-Bildes (F1) und auch von zweiten, unbelichteten Gebieten (F11) außerhalb des Standardgröße-Bildes (F1) zu ermöglichen.

3. Negativfilm-Abdecksystem gemäß Anspruch 1 oder 2, wobei die Positionen der ersten Erfassungsöffnungen (14b) zumindest teilweise innerhalb des Gebietes eines Standardgröße-Bildes (F1) liegen, das um ein Bild von der vierseitigen Fensteröffnung (14b, 15b) entfernt angeordnet ist.

4. Negativfilm-Abdecksystem gemäß irgendeinem der Ansprüche 1 bis 3, wobei die Achsen der optischen Pfade, die entsprechende Öffnungen der ersten und zweiten Erfassungsöffnungen (14b. 15b) miteinander verbinden, sich unter einem vorgegebenen Winkel bezüglich einer Ebene erstrecken, die durch einen in die Negativfilm-Abdeckeinheit (12) eingelegten Negativfilm (F) definiert wird.

5. Negativfilm-Abdecksystem gemäß irgendeinem der Ansprüche 1 bis 3, wobei die Achsen der optischen Pfade, die entsprechende Öffnungen der ersten und zweiten Erfassungsöffnungen (14b, 15b) miteinander verbinden, sich zu den Augen einer Person hin erstrecken, die die photographische Verarbeitungs- und Abziehmaschine betätigt.

6. Negativfilm-Abdecksystem gemäß irgendeinem der Ansprüche 1 bis 3, wobei mindestens entweder die ersten oder die zweiten Erfassungsöffnungen (14b, 15b) mit einem Licht-abschwächungsfilter bedeckt sind.

7. Negativfilm-Abdecksystem gemäß irgendeinem der Ansprüche 1 bis 3, wobei bei den zweiten Erfassungsöffnungen (15b) Jalousien vorgesehen sind, die unter dem gleichen Winkel geneigt sind wie eine Sehlinie einer Person, die die photographische Verarbeitungsmaschine betätigt.

## Revendications

1. Système de masquage pour film négatif à utiliser dans une machine de traitement et d'impression photographique conçue pour produire des épreuves photographiques à partir d'un film négatif (F) chargé dans un ensemble de masquage de film négatif (12), et comportant des cadres de dimensions normales (F1) et des cadres de dimensions panoramiques (F2) en combinaison aléatoire, le cadre de dimensions panoramiques (F2) étant désigné en masquant les deux bords longitudinaux du film (F) lors de la prise de vue, de façon à créer deux premières zones non exposées (F21) dans un cadre autrement normal, le système de masquage pour film négatif comprenant l'ensemble de masquage de film négatif (12), et une monture de cache (2) sur laquelle l'ensemble de masquage de film négatif (12) est chargé, l'ensemble de masquage de film négatif comprenant un moyen formant cache (14) et un moyen formant porte-film négatif (15), caractérisé par:
une première ouverture de fenêtre d'exposition de film à quatre côtés (14a) située dans le moyen formant cache (14) qui a une superficie et une forme identiques au cadre de dimensions panoramiques (F2);
une seconde ouverture de fenêtre d'exposition de film à quatre côtés (15a) située dans le moyen formant porte-film négatif (15), qui a une superficie et une forme identiques à la première ouverture de fenêtre d'exposition de film à quatre côtés (14a);
des premières ouvertures de détection (14b) à des positions particulières du moyen formant cache (14), qui sont à l'extérieur de l'ouverture de fenêtre d'exposition de film à quatre côtés (14a) et au moins partiellement à l'intérieur desdites premières zones non exposées (F21) d'un cadre de dimensions panoramiques (F2) situé au niveau de l'ouverture de fenêtre d'exposition de film à quatre côtés (14a) ou à un cadre de celle-ci;
des secondes ouvertures de détection (15b) situées dans le moyen formant porte-film négatif. en communication optique avec les ouvertures de détection du moyen formant cache (14).

2. Système de masquage pour film négatif selon la revendication 1, dans lequel les ouvertures de détection sont disposées de façon à permettre une vue d'un cadre de dimensions normales (F1) et également de secondes zones non exposées (F11) à l'extérieur du cadre de dimensions normales (F1).

3. Système de masquage pour film négatif selon la revendication 1 ou 2, dans lequel les positions des premières ouvertures de détection (14b) sont au moins partiellement à l'intérieur de la zone d'un cadre de dimensions normales (F1) situé à un cadre des ouvertures de fenêtre d'exposition à quatre côtés (14b, 15b).

4. Système de masquage pour film négatif selon l'une quelconque des revendications 1 à 3, dans lequel les axes des chemins optiques reliant les ouvertures correspondantes desdites premières et secondes ouvertures de détection (14b, 15b) s'étendent à un angle prédéterminé par rapport à un plan défini par un film négatif (F) chargé dans l'ensemble de masquage de film négatif (12).

5. Système de masquage pour film négatif selon l'une quelconque des revendications 1 à 3, dans lequel les axes des chemins optiques reliant les ouvertures correspondantes desdites premières et secondes ouvertures de détection (14b, 15b) s'étendent en direction des yeux d'une personne faisant fonctionner la machine de traitement et d'impression photographiques.

6. Système de masquage pour film négatif selon l'une quelconque des revendications 1 à 3, dans lequel au moins une des premières et des secondes ouvertures de détection (14b, 15b) est recouverte d'un filtre d'atténuation de lumière.

7. Système de masquage pour film négatif selon l'une quelconque des revendications 1 à 3, dans lequel des volets disposés en claire-voie sont prévus dans les secondes ouvertures de détection (15b), lesdits volets disposés en claire-voie étant inclinés avec le même angle qu'une ligne de vision d'une personne faisant fonctionner la machine de traitement photographique.
